# NEUE EUROPÄISCHE PATENTSCHRIFT

(11) **EP 1 380 445 B2**
(45) Veröffentlichungstag und Bekanntmachung des Hinweises auf die Entscheidung über den Einspruch: **23.05.2012**
(45) Hinweis auf die Patenterteilung: 02.08.2006
(21) Anmeldenummer: 03007573.3
(22) Anmeldetag: 02.04.2003
(51) Int. Cl.: B60D 1/54

(54) **Anhängezugvorrichtung**
Trailer traction device
Dispositif de traction de remorque

(30) Priorität: 11.07.2002 DE 10231221
(43) Veröffentlichungstag der Anmeldung: 14.01.2004
(73) Patentinhaber: Dr. Ing. h.c. F. Porsche AG, 70435 Stuttgart (DE)
(72) Erfinder: Reutlinger, Peter, 75015 Bretten (DE); Palmer, Eberhard, 71665 Vaihingen (DE); Piede, Andreas, 75428 Illingen (DE)

(56) Entgegenhaltungen:
- EP-A- 1 153 770
- EP-A2- 1 225 067
- WO-A-01/32451
- DE-A- 4 301 055
- DE-A- 10 023 641
- DE-A- 19 858 978
- DE-A1- 10 023 640
- US-A- 4 109 930
- US-A1- 2003 006 581

## Beschreibung

Die Erfindung bezieht sich auf eine Anhängezugvorrichtung.

Aus der gattungsbildenden DE 100 04 523 A1 ist eine Anhängerkupplung bekannt, die an einem Fahrzeug befestigt ist und über einen ansteuerbaren Motor in eine Gebrauchs- und Ruhestellung verschwenkbar ist. Über Befestigungsplatten erfolgt eine Verbindung der Anhängerkupplung mit dem Fahrzeug um auftretende Kräfte in das Fahrzeugchassis weiterzuleiten.

Aus der DE 198 58 978 A1 ist eine weitere Anhängerkupplung bekannt, welche ebenfalls motorisch verschwenkbar ist und u.a. einen Lagerblock aufweist, der in ein Gehäuse der Anhangerkupplung ein gebracht ist und mit einer Kontaktfläche ausgestattet derart, daß eine Kraftschlüssige Verbindung durch die Verspannung der Kontaktfläche gegen eine entsprechende Anlagefläche des Gehäuses zwischen lotzterem und dem Lagerblock ausgebildet wird.

DE 100 23 640 A1 zeigt eine Anhängezugvorrichtung für Kraftfahrzeuge mit einem eine Kupplungskugel aufweisenden Kugelhals, der in einer Gebrauchs- und Ruhestellung elektrisch angesteuert bewegbar ist, wobei ein Aufnahmeelement für den Kugelhals am Fahrzeugaufbau befestigt und der Kugelhals schwenkbar in einem eingesetzten Drehblock gehalten und abgestützt ist und dieser In Gebrauchsstellung in möglichen Belastungsrichtungen feststehend positioniert im Aufnahmeelement gehalten wird, wobei das Aufnahmeelement aus einem Trägerteil besteht, das am Fahrzeugaufbau befestigbar ist, wobei der Drehblock zwischen dem Aufnahmeelement formschlüssig angeordnet ist, wobei der Kugelhals über einen abgewinkelten Ansatzarm in dem im Trägerteil gehaltenen Drehblock um eine vertikale Achse und der Drehblock mit dem Kugelhals um eine durch einen Bolzen gebildete horizontale Achse verschwenkbar ist.

Die Aufgabe der Erfindung besteht darin, eine Anhängezugvorrichtung zu schaffen, welche bei auf die Anhängezugvorrichtung in der Gebrauchsstellung einwirkende Kräfte eine optimale Krafteinleitung bei allen möglichen Belastungsrichtungen gewährleistet.

Diese Aufgabe wird erfindungsgemäß durch Merkmale des Anspruchs 1 gelöst. Weitere vorteilhafte Merkmale beinhalten die Unteransprüche.

Die mit der Erfindung hauptsächlich erzielten Vorteile bestehen darin, daß die Anhängezugvorrichtung in allen möglichen Belastungsrichtungen während des Betriebes keine Bewegungen aus der Gebrauchsstellung heraus durchführen kann und lagestabil und kraftübertragend am Fahrzeugaufbau bzw. am Stoßfängerträger gehalten ist. Dies wird im wesentlichen durch ein Aufnahmeelement für den Kugelhals erzielt, der am Fahrzeugaufbau befestigt und schwenkbar in einem eingesetzten Drehblock gehalten ist, der in der Gebrauchsstellung über Abstützungen und dgl. Abstützmittel in möglichen Belastungsrichtungen feststehend positioniert im Aufnahmeelement gehalten ist.

Die Abstützungen der Anhängezugvorrichtung im Aufnahmeelement sind im wesentlichen durch Abstützflächen und Einhakmitteln gebildet, wobei das Aufnahmeelement aus einem Trägerteil, das endseitig jeweils mit Trägern verbunden ist, besteht, die am Fahrzeugaufbau befestigt werden.

Zur Schwenkbarkeit der Anhängezugvorrichtung von einer Gebrauchsstellung in eine Ruhestellung und zurück ist vorgesehen, daß der Kugelhals über einen abgewinkelten Ansatzarm in einem im Trägerteil gehaltenen Drehblock um eine vertikale Achse und der Drehblock selbst mit dem Kugelhals um eine horizontale Achse verschwenkbar ist. Diese Schwenkbarkeit des Drehblocks im Trägerteil zur Positionierung des Kugelhalses in der Gebrauchs- und Ruhestellung erfordert gezielte Abstützungen im Aufnahmeelement, sowie an Teilen der Vorrichtung, damit die Anhängezugvorrichtung im Zugbetrieb in allen möglichen Richtungen lagestabil bleibt.

Zum Verschwenken des Kugelhalses ist dieser mit dem abgewinkelten Ansatzarm versehen, welcher mit einem Schwenkhebel fest verbunden ist, der an einem Ende eine vorstehende Klinke umfaßt, welche in der Gebrauchsstellung in einen Schlitz des einen Schenkels im Trägerteil hineinragt und der an seinem anderen Ende mit einem Spindel-Stellelement verbunden ist.

Zur Abstützung des Kugelhalses bzw. des Drehblockes ist vorgesehen, daß dieser mit seinen Seitenflächen zwischen Schenkeln des Trägerteils angeordnet und an den Innenflächen der Schenkel über sogenannte Anlaufscheiben eines Schwenkbolzens für die horizontale Achse abgestützt und über einen stirnseitigen Torsionsanschlag in Position gehalten ist, wobei der Torsionsanschlag eine ortsfeste mit dem Trägerteil verbundenen Nase umfaßt, die in eine stirnseitige Ausnehmung des Drehblockes hineinragt und sich an Flächen der Ausnehmung bzw. sich die Nase in der Ausnehmung abstützen kann. Somit kann in der Gebrauchsstellung der Kugelhals bei einer Zugkraft einerseits im Drehblock und dieser andererseits über eine Anlaufscheibe zur Innenfläche des Schenkels am Trägerteil abgestützt werden, wobei die Nase des Torsionsanschlags in die stirnseitige Ausnehmung des Drehblockes hineinragt und sich an einer Fläche abstützt. Die Innenflächen der Schenkel im Trägerteil dienen insgesamt als Abstützflächen für den Drehblock und können unterstützend zum Torsionsanschlag und zu den Anlaufscheiben wirken.

Auch ist bei einer Druckkraft nach oben auf den Kugelhals eine optimale Abstützung des Drehbockes geschaffen, indem in der Gebrauchsstellung der Kugelhals im Drehblock sowie über die Klinke des Schwenkhebels zum Trägerteil hin abstützbar ist. Des weiteren ist bei Gebrauchsstellung des Kugelhalses bei einer Stützkraft nach unten der Drehblock über den stirnseitigen Torsionsanschlag an einer Abstützfläche des Drehblockes und/oder über die einhakende Klinke des Schwenkhebels abgestützt gehalten.

Bei diesen Belastungen auf den Kugelhals von unten und von oben kann über die entsprechenden Abstützflächen am Schenkel des Trägerteils und über die korrespondierenden Abstützungen am Drehblock sichergestellt werden, daß keine die Gebrauchslage der Anhängezugvorrichtung beeinträchtigende Relativbewegungen des Drehblockes im Aufnahmeelement stattfinden können.

Damit die Anhängezugvorrichtung auch in Einschwenkrichtung zur Ruhestellung bei einer in Gebrauchsstellung entsprechend gerichteten Seitenkraft auf den Kugelhals in stabiler Position verbleibt, ist vorgesehen, daß der Kugelhals über den Schwenkhebel und den daran gelagerten Spindel-Stellelement abgestützt ist, das ein selbsthemmendes Gewinde aufweist. Zusätzlich hierzu ist die Spindel des Stellelements über einen Motor automatisch getaktet antreibbar und die Spindel wird bei auf das Stellelement einwirkenden Seitenkräften dauernd derart nachgestellt, daß der Kugelhals in der Gebrauchsstellung lagestabil in Position gehalten wird. Hierdurch wird in vorteilhafter Weise nach der Erfindung erreicht, daß die Seitenkräfte einerseits über die in den Schlitz des Schenkels eingerastete Klinke des Schwenkhebels und andererseits über das Spindel-Stellelement aufgenommen werden kann, so daß die Lage des Kugelhalses in der Gebrauchsstellung stabil ist. Ein Wegklappen wird somit über die Selbsthemmung der Gewindespindel vermieden und auftretendes Spiel wird durch das automatische Nachtakten des Motors verhindert.

Bei einer Seitenkraft entgegen der Einschwenkrichtung des Kugelhalses in die Ruhestellung ist der Kugelhals über den Schwenkhebel am stirnseitigen in der Ausnehmung angeordneten Torsionsanschlag an einer Fläche des Anschlags abstützbar.

Ein Ausführungsbeispiel der Erfindung ist in den Zeichnungen dargestellt und wird im folgenden näher beschrieben.

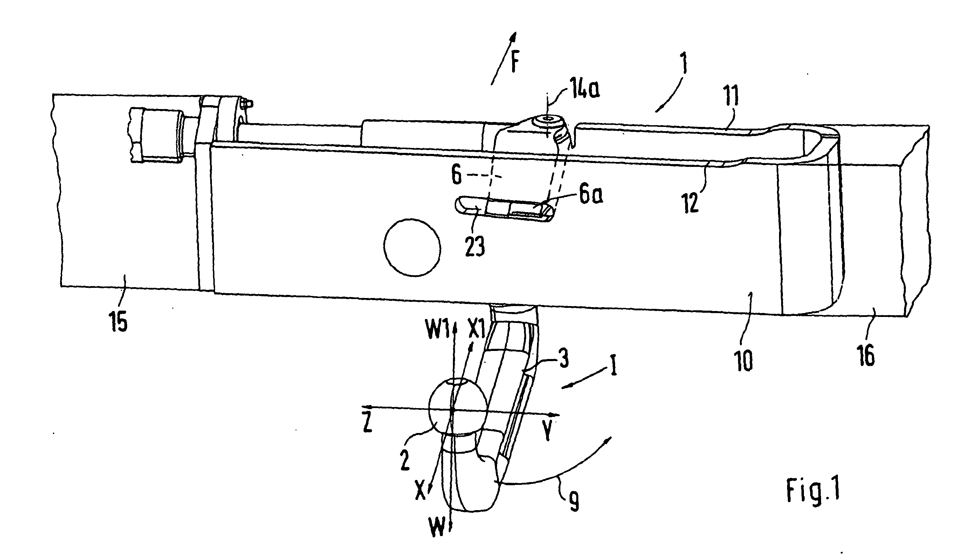

Es zeigen
- Fig. 1: eine schaubildliche Darstellung auf eine Anhängezugvorrichtung von oben mit einem profilierten Aufnahmeelement und anschließenden Trägern sowie einem Kupplungshals mit Kupplungskugel sowie den möglichen Belastungsrichtungen,
- Fig. 2: eine Draufsicht auf die Anhängezugvorrichtung mit im Aufnahmeelement angeordneten Spindel-Stellelement, Drehblock und Kugelhals,
- Fig. 3: eine Draufsicht auf den Kugelhals mit verbundenem Spindel-Stellelement,
- Fig. 4: eine Unteransicht auf den Kugelhals mit Drehblock und Torsionsanschlag und Abstützungen bzw. Abstützflächen,

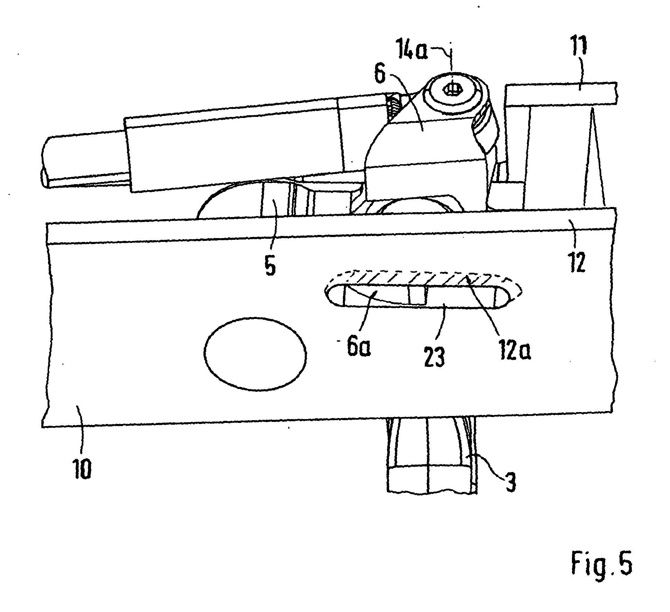

- Fig. 5: eine schaubildliche Darstellung auf eine Klinke eines Schwenkhebels und

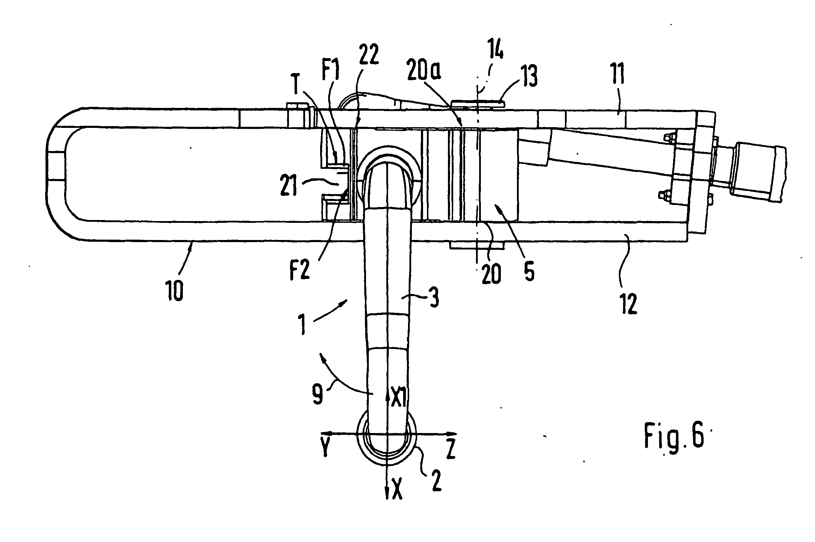

- Fig. 6: eine Unteransicht auf das Aufnahmeelement mit Drehblock und Spindel-Stellelement sowie Abstützungen am Drehblock.

Eine Anhängezugvorrichtung 1 umfaßt im wesentlichen eine mit einer Kupplungskugel 2 versehenen Kugelhals 3, der mit einem abgewinkelten Ansatzarm 4 in einem Drehblock 5 gehalten ist und der mittels eines fest verbundenen Schwenkhebels 6 mit einem von einem Motor 7 angetriebenen Spindel-Stellelement 8 von einer Gebrauchsstellung lin (Pfeilrichtung 9) in eine Ruhestellung und zurück bewegbar ist.

Der Drehblock 5 ist in einem als Trägerteil ausgeführten Aufnahmeelement 10 eingebettet und zwischen zwei parallelliegenden Schenkeln 11, 12 angeordnet und gehalten. Das Aufnahmeelement 10 kann aus einem profilierten geschlossenen Trägerteil bestehen, welches beidseitig anschließende Träger 15, 16 aufweist, welche mit dem Fahrzeugaufbau verbindbar sind.

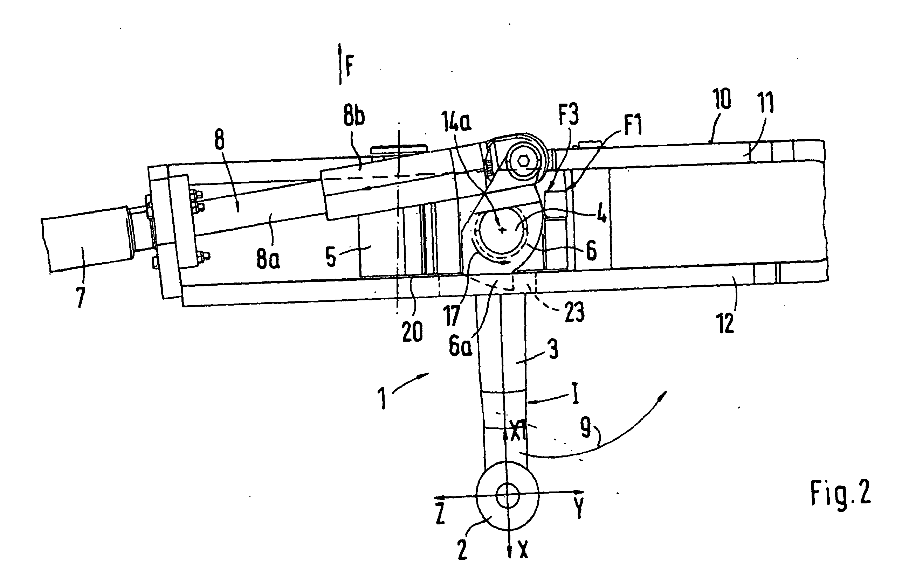

Die Verschwenkbarkeit des Kugelhalses 3 in die Ruhe- und Gebrauchsstellung erfolgt über das Spindel-Stellelement 8 in Verbindung mit dem Drehblock 5. Hierzu wird eine Spindelstange 8a des Stellelements 8 mit einem selbsthemmenden Gewinde in eine Gewindehülse 8b über den elektrisch angetriebenen Motor 7 verdreht, so daß sich der mit dem Ansatzarm 4 fest verbundene Schwenkhebel 6 in Pfeilrichtung 17 (Fig. 2) unter Mitnahme des Kugelhalses 3 um die vertikale Achse 14a verschwenkt. Wenn etwa eine gestreckte Lage von Spindel-Stellelement 8 und Kugelhals 3 erreicht ist, verschwenkt sich der Drehblock 5 insgesamt um die horizontale Achse 14, welche von einer Drehbuchse bzw. einem Bolzen 13 gebildet wird, die bzw. der in den Schenkeln 11, 12 des Trägerteils 10 gehalten ist und zum Verschwenken des Drehblocks 5 jeweils an seinen Enden eine Anlaufscheibe 20, 20a aufweist, die innenseitig der Schwenkel 11, 12 anliegend sind.

Zur Aufnahme von Kräften in allen möglichen Richtungen ist das Trägerteil 10 als Profil oder Kastenprofil ausgeführt, indem der Drehblock 5 zwischen den Schenkeln 11, 12 formschlüssig angeordnet ist.

Bei auftretenden Zugkräften in Richtung X während der Gebrauchsstellung l der Anhängezugvorrichtung wird diese über den Kugelhals 3 in den Drehblock 5 geleitet. Dieser stützt sich sowohl über die Anlaufscheibe 20 am Bolzen 13 als auch über eine stirnseitige Nase 21 eines Torsionsanschlags T ab, die in eine Nut bzw. Ausnehmung 22 des Drehblockes 5 hineinragt. Diese Nase 21 ist ortsfest mit dem Trägerteil 10 bzw. den Schenkeln 11, 12 verbunden. Durch diese Abstützung über die Scheibe 20 und einer Fläche F1 wird ein Verdrehen des Gesamtsystems vermieden.

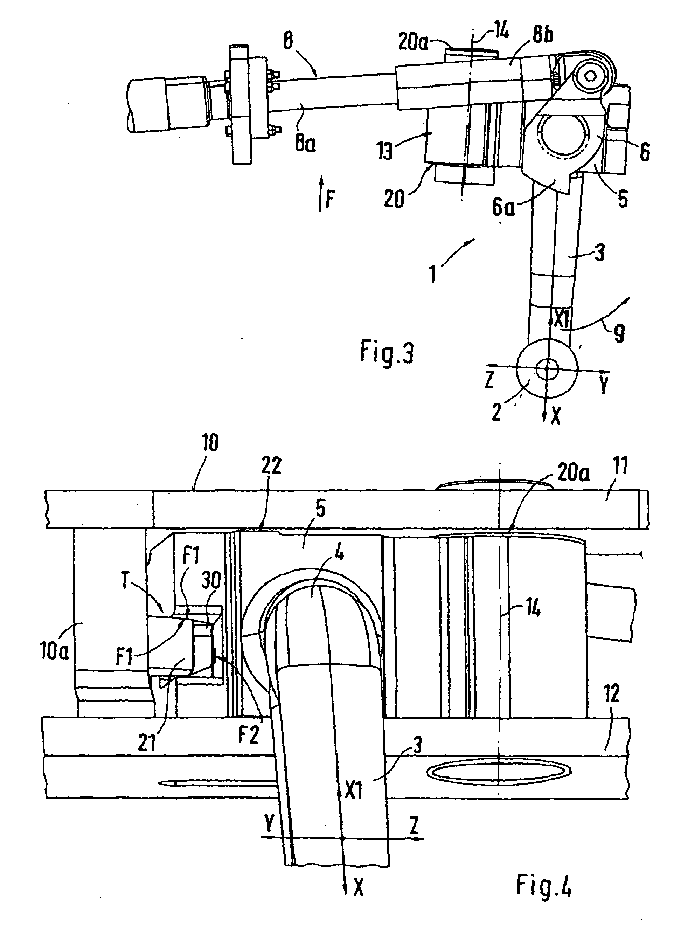

Beim Auftreten von Druckkräften in Richtung X1 werden diese über den Kugelhals 3 in den Drehblock 5 geleitet. Dieser stützt sich direkt am Schenkel 11 des Trägerteils 10, über die weitere Anlaufscheibe 20a sowie über einen vorgehobenen Flächenansatz 22 b ab, was in Fig. 4 näher dargestellt ist.

Bei einer Stützkraft nach unten in Richtung W geht diese Kraft über den Kugelhals 3 in den Drehblock 5. Durch die stirnseitig in die Nut 30 des Drehblocks (5) hineinragende Nase 21 des Torsionsanschlags T wird die Kraft über eine Fläche F1 der Ausnehmung 30 in das Trägerteil 10 geleitet.

Bei einer Stützkraft nach oben in Richtung W1 geht die Kraft über den Kugelhals 3 in den Drehblock 5 und von diesem in den Schwenkhebel 6, der eine Klinke 6a umfaßt, welche in der Gebrauchsstellung l in einen Schlitz 23 des Schenkels 12 des Trägerteils 10 angeordnet ist und sich an der Schwenkfläche 12a abstützt.

Bei einer Seitenkraft von links - in Bezug auf die Fahrtrichtung F - in Richtung Y, das heißt entgegen dem Uhrzeigersinn, geht die Kraft über den Kugelhals 3, dem Schwenkhebel 6 auf das Stellelement 8. Damit ein Wegklappen des Kugelhalses 3 vermieden wird, weist die Gewindespindel 8 eine Selbsthemmung auf. Ein dennoch auftretendes Spiel wird durch ein automatisches Nachtakten über den Motor 7 verhindert, so daß der Kugelhals 3 in der Gebrauchsstellung l immer eine lagestabile Position einnehmen kann.

Bei einer Seitenkraft von rechts - in Bezug auf die Fahrtrichtung F - in Richtung Z geht die Kraft über den Kugelhals 3 in den Schwenkhebel 6 bzw. auf die Klinke 6a und auf die Nase 21 des Torsionsanschlags T bzw. auf die Abstützfläche F2 und von hier aus in das Aufnahmeelement 10.

## Patentansprüche

1. Anhängezugvorrichtung für Kraftfahrzeuge mit einem eine Kupplungskugel aufweisenden Kugelhals, der in einer Gebrauchs- und Ruhestellung elektrisch angesteuert bewegbar ist, wobei ein Aufnahmeelement (10) für den Kugelhals (3) am Fahrzeugaufbau befestigt und der Kugelhals (3) schwenkbar in einem eingesetzten Drehblock (5) gehalten und abgestützt ist und dieser In Gebrauchsstellung (I) in möglichen Belastungsrichtungen (W, W1, X, X1, Z, Y) feststehend positioniert im Aufnahmeelement (10) gehalten wird, wobei das Aufnahmeelement (10) aus einem Trägerteil besteht, das endseitig jeweils mit weiteren Trägern (15, 16) verbunden und am Fahrzeugaufbau befestigbar ist, wobei das Trägerteil als Profil mit zwei parallel liegenden Schenkeln (11,12) ausgeführt ist, wobei der Drehblock (5) zwischen den Schenkeln (11, 12) formschlüssig angeordnet ist, wobei der Kugelhals (3) über einen abgewinkelten Ansatzarm (4) in dem im Trägerteil (10) gehaltenen Drehblock (5) um eine vertikale Achse (14a) und der Drehblock (5) mit dem Kugelhals (3) um eine durch einen Bolzen (13) gebildete horizontale Achse (14) verschwenkbar ist, und wobei der Drehblock (5) mit seinen Seitenflächen zwischen Schenkeln (11, 12) des Trägerteils (10) angeordnet und an den Innenflächen der Schenkel (11, 12) über Anlaufscheiben (20 oder 20a) des Bolzens (13) abgestützt und über einen stirnseitigen Torsionsanschlag (T) in Position gehalten Ist

2. Anhängezugvorrichtung nach Anspruch 1, **dadurch gekennzeichnet, dass** der Drehblock (5) über eine Klinke (6a) eines Schwenkhebels (6) in Position gehalten ist.

3. Anhängezugvorrichtung nach den Ansprüchen 1 oder 2, **dadurch gekennzeichnet, dass** der Torsionsanschlag (T) eine ortsfest mit dem Trägerteil (10) verbundene Nase (21) umfasst, die in eine stirnseitige Ausnehmung (30) des Drehblockes (5) hineinragt und sich an Flächen (F1 und/oder F2) der Ausnehmung (30) abstützt

4. Anhängezugvorrichtung nach einem oder mehreren der vorhergehenden Ansprüche **dadurch gekennzeichnet, dass** in der Gebrauchsstellung (I) der Kugelhals (3) bei einer Zugkraft in Richtung (X) einerseits im Drehblock (5) und dieser andererseits über die Anlaufscheibe (20) an der Innenfläche des Schenkels (12) am Trägerteil (10) abgestützt ist, wobei die Nase (21) des Torsionsanschlages (T) in die stirnseitige Ausnehmung (30) des Drehblockes (5) hineinragt und einer Abstützfläche (F1) gegenübersteht.

5. Anhängezugvorrichtung nach einem oder mehreren der vorhergehenden Ansprüche, **dadurch gekennzeichnet, dass** mit dem Ansatzarm (4) des Kugelhalses (3) der Schwenkhebel (6) fest verbunden ist, der an einem Ende die vorstehende Klinke (6a) umfasst, welche in der Gebrauchsstellung (I) in einen Schlitz (23) des einen Schenkels (12) des Trägerteils (10) hineinragt und der an seinem anderen Ende mit einem Spindel-Stellelement (8) verbunden ist.

6. Anhängezugvorrichtung nach einem oder mehreren der vorhergehenden Ansprüche, **dadurch gekennzeichnet, dass** in der Gebrauchsstellung (I) des Kugelhalses (3) bei einer Druckkraft nach oben in Richtung (W1) der Kugelhals (3) im Drehblock (5) und über die Klinke (6a) des Schwenkhebels (6) zum Trägerteil (10) abstützbar ist.

7. Anhängezugvorrichtung nach einem oder mehreren der vorhergehenden Ansprüche, **dadurch gekennzeichnet, dass** in der Gebrauchsstellung (I) der Kugelhals (3) bei einer Stützkraft nach unten in Richtung (W) der Drehblock (5) über den stirnseitigen Torsionsanschlag (T) an einer Abstützfläche (F1) und/oder über die einhakende Klinke (6a) des Schwenkhebels (6) abgestützt gehalten wird.

8. Anhängezugvorrichtung nach einem oder mehreren der vorhergehenden Ansprüche, **dadurch gekennzeichnet, dass** der Kugelhals (3) bei einer Seitenkraft in Richtung (Y) über den Schwenkhebel (6) und über das daran gelagerte Spindel-Stellelement (8) abgestützt ist, welches ein selbsthemmendes Gewinde aufweist.

9. Anhängezugvorrichtung nach Anspruch 8, **dadurch gekennzeichnet, dass** die Spindel (8a) des Stellelements (8) über einen Motor (7) antreibbar ist und die Spindel (8a) bei auf das Stellelement (8) einwirkenden Seitenkräften in Richtung (Y) automatisch derart nachstellbar ist, dass der Kugelhals (3) in der Gebrauchslage (I) in gesicherter Position gehalten wird.

10. Anhängezugvorrichtung nach einem oder mehreren der vorhergehenden Ansprüche, **dadurch gekennzeichnet, dass** der Kugelhals (3) in Gebrauchsstellung (I) bei einer Seitenkraft in Richtung (Z), über den Schwenkhebel (6) am stirnseitigen in der Ausnehmung (30) angeordneten Torsionsanschlag (T) an der Fläche (F3) des Anschlags (T) abstützbar ist.

11. Anhängezugvorrichtung nach einem oder mehreren der vorhergehenden Ansprüche, **dadurch gekennzeichnet, dass** der Kugelhals (3) in Gebrauchsstellung (I) bei einer Druckkraft in Richtung (X1) im Drehblock (5) und dieser direkt in dem Trägerteil (10) über die vorragende Fläche (22) und die Anlaufscheibe (20a) abgestützt ist.

## Claims

1. A trailer towing device for motor vehicles, comprising a ball neck which has a coupling ball and is movable by electric actuation into a position of use and a rest position, wherein a receiving member (10) for the ball neck (3) is fixed to the vehicle body, and the ball neck (3) is pivotably held and supported in an inserted rotary block (5) which, in the position of use (I), is held in the receiving member (10) so as to be fixedly positioned in possible loading directions (W, W1, X, X1, Z, Y), wherein the receiving member (10) comprises a support part which is connected at each end to further supports (15, 16) and is fixable to the vehicle body wherein the support part is designed as a profile with two parallel limbs (11, 12), wherein the rotary block (5) is arranged with a positive fit between the limbs (11, 12), wherein the ball neck (3) is pivotable about a vertical axis (14a) by means of an angled extension arm (4) in the rotary block (5) held in the support part (10), and the rotary block (5) is pivotable with the ball neck (3) about a horizontal axis (14) formed by a bolt (13), and wherein the rotary block (5) is arranged with its side surfaces between limbs (11, 12) of the support part (10) and is supported against the inner surfaces of the limbs (11, 12) via thrust washers (20 or 20a) of the bolt (13) and is held in position via an end torsion stop (T).

2. A trailer towing device according to claim 1, **characterized in that** the rotary block (5) is held in position via a detent (6a) of a pivoted lever (6).

3. A trailer towing device according to claim 1 or 2, **characterised in that** the torsion stop (T) comprises a projection (21) which is fixedly connected to the support part (10) and which projects into an end recess (30) in the rotary block (5) and is supported against surfaces (F1 and/or F2) of the recess (30).

4. A trailer towing device according to one or more of the preceding claims, **characterised in that**, in the position of use (I) and in the event of a tensile force in the direction (X), the ball neck (3) on the one hand is supported in the rotary block (5), and the rotary block (5) on the other hand is supported against the inner surface of the limb (12) on the support part (10) via the thrust washer (20), wherein the projection (21) of the torsion stop (T) projects into the end recess (30) in the rotary block (5) and lies opposite a supporting surface (F1).

5. A trailer towing device according to one or more of the preceding claims, **characterised in that** the pivoted lever (6) is fixedly connected to the extension arm (4) of the ball neck (3) and at one end comprises the projecting detent (6a) which, in the position of use (I), projects into a slot (23) in the one limb (12) of the support part (10) and at its other end is connected to a spindle-type adjusting member (8).

6. A trailer towing device according to one or more of the preceding claims, **characterised in that**, in the position of use (I) of the ball neck (3) and in the event of an upwards compressive force in the direction (W1), the ball neck (3) is supportable in the rotary block (5) and, via the detent (6a) of the pivoted lever (6), in relation to the support part (10).

7. A trailer towing device according to one or more of the preceding claims, **characterised in that**, in the position of use (I) of the ball neck (3) and in the event of a downwards supporting force in the direction (W), the rotary block (5) is held supported via the end torsion stop (T) against a supporting surface (F1) and/or via the hooking detent (6a) of the pivoted lever (6).

8. A trailer towing device according to one or more of the preceding claims, **characterised in that**, in the event of a lateral force in the direction (Y), the ball neck (3) is supported via the pivoted lever (6) and via the spindle-type adjusting member (8) which is mounted thereon and has a self-locking thread.

9. A trailer towing device according to claim 8, **characterised in that** the spindle (8a) of the adjusting member (8) is drivable by a motor (7) and, in the event of lateral forces acting on the adjusting member (8) in the direction (Y), the spindle (8a) is automatically adjustable in such a way that the ball neck (3) is securely held in the position of use (I).

10. A trailer towing device according to one or more of the preceding claims, **characterised in that**, in the position of use (I) and in the event of a lateral force in the direction (Z), the ball neck (3) is supportable via the pivoted lever (6) against the end torsion stop (T) arranged in the recess (30), against the surface (F3) of the stop (T).

11. A trailer towing device according to one or more of the preceding claims, **characterised in that**, in the position of use (I) and in the event of a compressive force in the direction (X1), the ball neck (3) is supported in the rotary block (5), and the latter is directly supported in the support part (10) via the projecting surface (22) and the thrust washer (20a).

## Revendications

1. Dispositif d'attelage pour véhicules automobiles avec un col de boule d'attelage, comportant une boule d'attelage, qui est déplaçable par commande électrique dans une position d'utilisation et de repos, un élément de logement (10) étant fixé sur la carrosserie du véhicule pour le col de boule d'attelage (3) et le col de boule d'attelage (3) étant maintenu et supporté de manière pivotante dans un bloc pivotant encastré (5) et celui-ci étant maintenu fixement en position dans l'élément de logement (10) dans la position d'utilisation (I) dans des directions de charge possibles (W, W1, X, X1, Z, Y), l'élément de logement (10) étant constitué d'une partie de support qui est raccordée aux extrémités à d'autres supports (15, 16) et qui peut être fixée sur la carrosserie du véhicule, la partie de support étant réalisée sous forme de profilé avec deux branches parallèles (11, 12), le bloc pivotant (5) étant disposé par engagement positif entre les branches (11, 12), le col de boule d'attelage (3) pouvant pivoter autour d'un axe vertical (14a) à l'aide d'un bras à épaulement plié (4) dans le bloc pivotant (5) maintenu dans la partie de support (10) et le bloc pivotant (5) pouvant pivoter avec le col de boule d'attelage (3) autour d'un axe horizontal (14) réalisé par un axe (13), et le bloc pivotant (5) étant disposé avec ses faces latérales entre les montants (11, 12) de la partie de support (10) et supporté sur les faces intérieures des montants (11, 12) par des rondelles d'arrêt (20 ou 20a) de l'axe (13) et/ou maintenu en position par une butée de torsion frontale (T).

2. Dispositif d'attelage selon la revendication 1, **caractérisé en ce que** le bloc pivotant (5) est maintenu en position par un cliquet (6a) d'un levier pivotant (6).

3. Dispositif d'attelage selon la revendication 1 ou 2, **caractérisé en ce que** la butée de torsion (T) comprend un taquet (21) relié fixement à la partie de support (10) qui fait saillie dans un creux frontal (30) du bloc pivotant (5) et qui s'appuie sur des faces (F1 et/ou F2) du creux (30).

4. Dispositif d'attelage selon l'une ou plusieurs des revendications précédentes, **caractérisé en ce que**, dans la position d'utilisation (I), d'une part, le col de boule d'attelage (3) est supporté dans le bloc pivotant (5) en présence d'une force de traction dans la direction (X) et, d'autre part, celui-ci est supporté par la rondelle d'arrêt (20) sur la face intérieure du montant (12) sur la partie de support (10), le taquet (21) de la butée de torsion (T) faisant saillie dans le creux frontal (30) du bloc pivotant (5) et étant placé en face d'une face d'appui (F1).

5. Dispositif d'attelage selon l'une ou plusieurs des revendications précédentes, **caractérisé en ce que** le levier pivotant (6), qui comporte le cliquet (6a) en saillie à une extrémité qui, dans la position d'utilisation (I) fait saillie dans une fente (23) d'un montant (12) de la partie de support (10), et qui, à son autre extrémité, est raccordé à un élément d'ajustage de broche (8), est raccordé fixement au bras à épaulement (4) du col de boule d'attelage (3).

6. Dispositif d'attelage selon l'une ou plusieurs des revendications précédentes, **caractérisé en ce que**, dans la position d'utilisation (I) du col de boule d'attelage (3), en présence d'une force de pression dirigée vers le haut dans la direction (W1), le col de boule d'attelage (3) peut être supporté par rapport à la partie de support (10) dans le bloc pivotant (5) et par le cliquet (6a) du levier pivotant (6).

7. Dispositif d'attelage selon l'une ou plusieurs des revendications précédentes, **caractérisé en ce que**, dans la position d'utilisation (I) du col de boule d'attelage (3), en présence d'une force d'appui dirigée vers le bas dans la direction (W), le bloc pivotant (5) est maintenu supporté sur une face d'appui (F1) par la butée de torsion frontale (T) et/ou par le cliquet accroché (6a) du levier pivotant (6).

8. Dispositif d'attelage selon l'une ou plusieurs des revendications précédentes, **caractérisé en ce que**, en présence d'une force latérale dans la direction (Y), le col de boule d'attelage (3) est supporté par le levier pivotant (6) et par l'élément d'ajustage de broche (8) logé dans celui-ci, qui comporte un filetage autobloquant.

9. Dispositif d'attelage selon la revendication 8, **caractérisé en ce que** la broche (8a) de l'élément d'ajustage (8) peut être entraînée par un moteur (7) et la broche (8a), avec des forces latérales dans la direction (Y) s'exerçant sur l'élément d'ajustage (8), est ajustable automatiquement de manière à ce que le col de boule d'attelage (3) soit maintenu en position bloquée dans la position d'utilisation (I).

10. Dispositif d'attelage selon l'une ou plusieurs des revendications précédentes, **caractérisé en ce que**, dans la position d'utilisation (I), en présence d'une force latérale dans la direction (Z), le col de boule d'attelage (3) peut être supporté sur la face (F3) de la butée (T) par le levier pivotant (6) dans la butée de torsion (T) frontale disposée dans le creux (30).

11. Dispositif d'attelage selon l'une ou plusieurs des revendications précédentes, **caractérisé en ce que**, dans la position d'utilisation (I), en présence d'une force de pression dans la direction (X1), le col de boule d'attelage (3) est supporté dans le bloc pivotant (5) et celui-ci est supporté directement dans la partie de support (10) par la face en saillie (22) et la rondelle d'arrêt (20a).
